# EUROPÄISCHE PATENTSCHRIFT

(11) **EP 0 830 959 B1**
(45) Veröffentlichungstag und Bekanntmachung des Hinweises auf die Patenterteilung: **27.11.2002**
(21) Anmeldenummer: 97108497.5
(22) Anmeldetag: 27.05.1997
(51) Int. Cl.: B60G 21/055, B60G 11/28, B60G 9/00

(54) **Aufhängung für luftgefederte Fahrzeugradachse**
Suspension for an air suspended vehicle axle
Suspension pour un essieu de véhicule à suspension pneumatique

(30) Priorität: 19.09.1996 DE 29616257 U
(43) Veröffentlichungstag der Anmeldung: 25.03.1998
(73) Patentinhaber: Otto Sauer Achsenfabrik Keilberg, 63856 Bessenbach-Keilberg (DE)
(72) Erfinder: Koschinat, Hubert H., Dipl.Ing., 63768 Hösbach (DE)
(74) Vertreter: KEIL & SCHAAFHAUSEN

(56) Entgegenhaltungen:
- DE-A- 4 213 676
- DE-A- 4 319 117
- DE-A- 19 617 929
- US-A- 4 415 179
- US-A- 5 375 871
- Bergische Achsenfabrik Fr. Kotz & Söhne, Prospekt BPW-0-9/89d, Seiten 1, 9, 10 und 26 1989
- VERKAUFSKATALOG BPW-EL-SL95/1D(6002) 1995, Seiten 30 - 33

## Beschreibung

Die Erfindung bezieht sich auf eine Aufhängung für eine luftgefederte Fahrzeugradachse nach dem Oberbegriff des Anspruchs 1.

Bei bekannten Aufhängungen ist die Luftfeder meist mit dem Führungslenker in fester unveränderbarer Position verbunden, bspw. der Luftfederbalg auf den Führungslenker aufgeschweißt. Eine nachträgliche Positionsänderung ist dabei nicht möglich.

Aus dem Prospekt BPW-0-9/89d der Bergische Achsenfabrik Fr. Kotz & Söhne, Seiten 1, 9, 10 und 26 aus dem Jahre 1989 und dem Verkaufskatalog BPW-EL-SL 95/1d [6002], Seiten 30 bis 33 aus dem Jahre 1995 ist eine Aufhängung für eine luftgefederte Fahrzeugachse der eingangs genannten Art bekannt. Bei dieser sind an dem hinteren Ende des Tragarmes drei Löcher in Reihe in unterschiedlichem Abstand voneinander vorgesehen, um unterschiedliche Luftfederbalg-Typen anzubringen. Es ist jedoch nicht möglich, ein und denselben Luftfederbalg in unterschiedlichem Abstand von dem vorderen chassisfesten Lagerpunkt oder in unterschiedlichem Abstand von der Längsmittelebene des Fahrzeuges anzuordnen. Dies liegt daran, dass die Luftfederbälge jeweils mittels zwei Schrauben befestigt werden, deren Abstand den unterschiedlichen Lochabständen des Tragarmes entsprechen.

Aus der US-A-5,375,871 ist eine Aufhängung für eine luftgefederte Fahrzeugachse, mit einem starren Achskörper und mit je wenigstens einem Führungslenker beidseits der Fahrzeuglängsmittelebene bekannt, welcher mit seinem vorderen Ende an einem chassisfesten Lagerpunkt angelenkt und im Abstand davon mit dem Achskörper verbunden ist, wobei ein von dem Achskörper aus jeweils nach hinten ragender, eine mehrere Löcher für den lösbaren Anschluss einer Luftfeder aufweisende Lagerplatte bildender Tragarm das untere Auflager für die Luftfeder bildet, auf deren Oberseite sich das Chassis abstützt. Dabei ist die Luftfeder jedoch nur in einer einzigen, durch die Löcher vorgegebenen Position befestigbar.

Aus der DE-A-42 13 676 ist eine Luftfeder für Fahrzeuge mit einem elastomeren Rollbalg und einem Abrollkolben bekannt. Der Abrollkolben ist bodenseitig an einem abzufedernden Fahrzeugteil lösbar befestigt. Um den Abrollkolben auf einfachere Weise in verschiedenen Positionen an dem abzufedemden Fahrzeugteil befestigen zu können, weist er eine bodenseitig offene, axial verlaufende Aufnahmeöffnung auf. In die Aufnahmeöffnung ist ein sich axial erstreckendes Befestigungsteil passend einschiebbar. Das Befestigungsteil weist an seinem freien Ende einen sich seitlich erstreckenden Befestigungsansatz auf, über den das Befestigungsteil am abzufedernden Fahrzeugteil angebracht ist. Da der die Aufnahmeöffnung aufweisende Stützabschnitt des Abrollkolbens außermittig angeordnet ist, kann der die Befestigungslöcher aufweisende Befestigungsansatz des Befestigungsteils in zwei um 180° um die Längsachse gedrehten Positionen angebracht werden, sodass sich ein unterschiedlicher seitlicher Versatz des Abrollkolbens zu dem Fahrzeugteil ergibt.

Aufgabe der vorliegenden Erfindung ist es, eine Aufhängung der eingangs genannten Art zu schaffen, bei welcher Luftfedern verschiedener Hersteller mit unterschiedlichen Anschlussmaßen einsetzbar sind, so dass bspw. die Luftfeder möglichst weit außen, jedoch ohne mit dem Fahrzeugreifen zu kollidieren, und in optimalem Abstand von dem Lagerpunkt des Führungslenkers positioniert werden kann.

Diese Aufgabe wird erfindungsgemäß mit einer Aufhängung gelöst, welche die Merkmale des Anspruchs 1 aufweist.

So kann die Luftfeder einfach mittels eines Befestigungsbolzens in einem der vorgesehenen Löcher wahlweise lösbar festgelegt werden.

Gemäß einem weiteren bevorzugten Erfindungsmerkmal weist der Tragarm jedenfalls im Bereich der Lagerplatte einen nach unten offenen U-Querschnitt mit gegenüber der oberen Lagerplatte nach unten abgewinkelten Seitenschenkeln auf, so dass die Lagerplatte hinreichend ausgesteift ist.

In besonderer Ausgestaltung des Erfindungsgedankens weist die Luftfeder in an sich bekannter Weise einen Tauchkolben für einen Luftfederbalg auf; der Tauchkolben ist dabei mittels einer Befestigungsplatte auf der Lagerplatte lösbar befestigt. Dies erlaubt eine einfache und sichere Montage der jeweiligen Luftfeder.

Die Befestigungsplatte kann zu diesem Zweck eine Mittelöffnung für einen durch eines der Löcher der Lagerplatte hindurchführbaren Befestigungsbolzen aufweisen.

Zur Gewährleistung hinreichender Stabilität kann die Mittelöffnung in einem zentrischen Ansatz der Befestigungsplatte vorgesehen sein, wobei sich vorzugsweise an den Ansatz nach außen im Wesentlichen radiale Versteifungsstege anschließen.

Die Montage der Luftfeder wird dann noch dadurch weiter vereinfacht, wenn die Mittelöffnung ein Innengewinde für den Befestigungsbolzen aufweist.

In Weiterbildung des Erfindungsgedankens ist ferner vorgesehen, dass die Befestigungsplatte über ihren Außenumfang verteilte Durchtrittsöffnungen für in den Tauchkolben der Luftfeder eintretende Anschlussbolzen aufweist.

Die erfindungsgemäß vorgesehene Befestigungsplatte kann bspw. zur Sicherung eines geringen Gewichtes aus Leichtmetall oder Kunststoff bestehen.

Nachfolgend werden anhand der Zeichnungen besondere Ausgestaltungen der Erfindung näher erläutert.

Es zeigen:
- Fig. 1a: in Draufsicht schematisch eine die Erfindung aufweisende Achsaufhängung,
- Fig. 1b: die Achsaufhängung von Fig. 1 in Seitenansicht,
- Fig. 2a: eine nach der Erfindung vorgesehene, auf dem Trägerarm eines Führungslenkers festgelegte Befestigungsplatte für die Luftfeder im Schnitt A-A von Fig. 2b,
- Fig. 2b: die Befestigungsplatte von Fig. 2a in Draufsicht, und
- Fig. 2c: einen Teilschnitt B-B der Befestigungsplatte gemäß Fig. 2b.

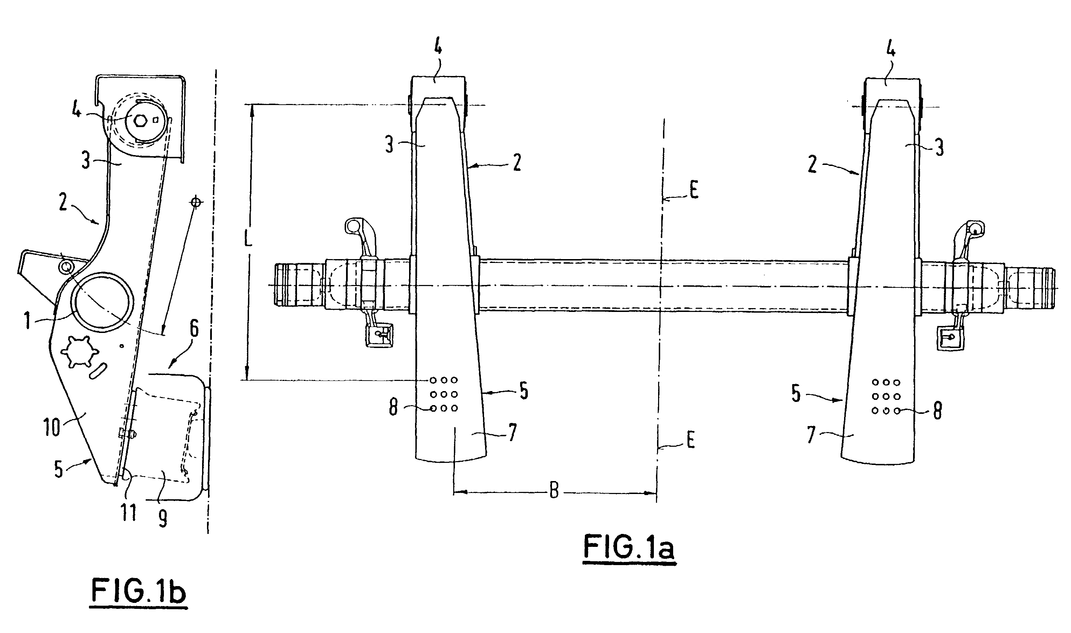

Die in den Fig. 1a und 1b veranschaulichte Aufhängung für eine luftgefederte Fahrzeugradachse hat einen starren Achskörper 1 und zwei Führungslenker 2, je einen auf jeder Seite der Fahrzeuglängsmittelebene E. Der jeweilige Führungslenker 2 ist mit seinem vorderen Ende 3 an einem als Schwenklager ausgebildeten chassisfesten Lagerpunkt 4 angelenkt. Im Abstand hinter dem jeweiligen Lagerpunkt 4 ist der jeweilige Führungslenker 2 mit dem Achskörper 1 fest verbunden. In dem dargestellten Fall ist der als Achsrohr ausgebildete Achskörper 1 durch nach unten abgewinkelte Seitenschenkel 10 des im Querschnitt im Wesentlichen U-förmigen Führungslenkers 2 hindurch gesteckt und mit diesem verschweißt. Es ist aber auch möglich, den Achskörper 1 in an sich bekannter Weise mit den Führungslenkern 2, bspw. über U-Bügel, zu verspannen. Der jeweilige Führungslenker 2 setzt sich nach hinten über den Achskörper 1 hinaus in einen Tragarm 5 fort, welcher das untere Auflager einer Luftfeder 6 (Fig. 1b) bildet, auf deren Oberseite sich das Chassis des Fahrzeuges abstützt.

Die Luftfeder 6 ist in veränderbarer Position auf dem Tragarm 5 befestigbar, indem der Tragarm 5 eine etwa horizontale Lagerplatte 7 für die Luftfeder 6 bildet, in welcher mehrere Löcher 8 für den lösbaren Anschluss der Luftfeder 6 vorgesehen sind. In Fig. 1a ist in jeder Lagerplatte 7 eine Anordnung von neun Löchern 8 dargestellt, welche über die Länge und die Breite der Lagerplatte 7 verteilt sind. Auf diese Weise lässt sich die Position der Luftfeder 6 hinsichtlich ihres Abstandes L von dem chassisfesten Lagerpunkt 4 als auch hinsichtlich ihres Abstandes B von der Fahrzeuglängsmittelebene E verändern. So kann jedem Luftfedertyp ein optimaler Abstand von dem Lagerpunkt 4 und ein möglichst geringer Abstand von den (nicht dargestellten) Fahrzeugreifen gegeben werden.

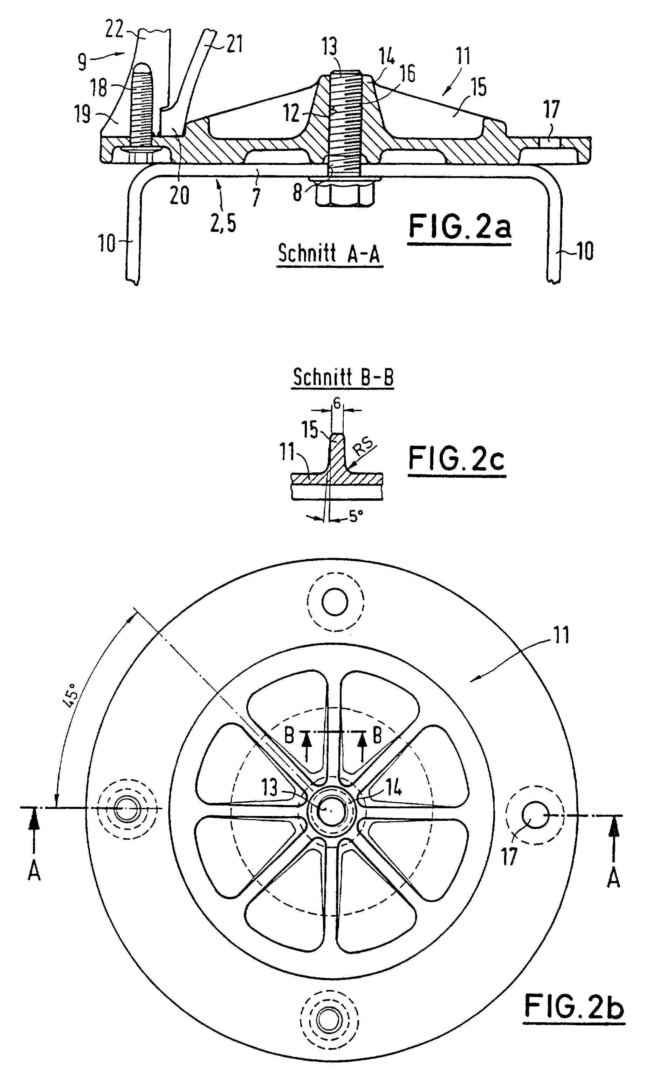

Der Tragarm 5 hat insbesondere auch im Bereich der Lagerplatte 7 einen nach unten offenen U-Querschnitt mit gegenüber der oberen Lagerplatte 7 nach unten abgewinkelten Seitenschenkeln 10 (vgl. insbesondere Fig. 2a).

Entsprechend der Darstellung von Fig. 2a weist die Luftfeder 6 in an sich bekannter Weise einen Tauchkolben 9 für einen Luftfederbalg auf. Der Tauchkolben 9 ist mittels eines Befestigungsbolzens 13, welcher durch eines der Löcher 8 der Lagerplatte 7 hindurchgeführt ist, lösbar montiert. Zu diesem Zweck hat die Befestigungsplatte 11 eine Mittelöffnung 12 für den Befestigungsbolzen 13, welcher als Gewindebolzen ausgebildet in ein Innengewinde 16 der Mittelöffnung 12 der Befestigungsplatte 11 eingreift. Die Mittelöffnung 12 und damit auch das Innengewinde 6 sind in einem zentrischen, auf der der Lagerplatte 7 abgewandten Seite der Befestigungsplatte 11 vorspringende Ansatz 14 vorgesehen. Nach außen schließen sich zur Versteifung der Befestigungsplatte 11 an den Ansatz 14 im Wesentlichen radiale Verstärkungsstege 15 an.

Über ihren Außenumfang verteilt, weist die Befestigungsplatte 11 ferner Durchtrittsöffnungen 17 für in den unteren Rand des Tauchkolbens 9 der Luftfeder 6 eingreifende Anschlussbolzen 18 auf. Die Anschlussbolzen 18 können dabei entweder, wie in Fig. 2a dargestellt, in den unteren Rand 19 des Tauchkolbenmantels 22 oder in den unteren Rand 20 eines Stützkegels 21 für den Tauchkolben 9 eingreifen.

Die Befestigungsplatte 11 kann aus Gewichtsgründen aus Leichtmetall oder Kunststoff bestehen.

### Bezugszeichen

- 1: Achskörper
- 2: Führungslenker
- 3: vorderes Ende
- 4: Lagerpunkt
- 5: Tragarm
- 6: Luftfeder
- 7: Lagerplatte
- 8: Löcher
- 9: Tauchkolben
- 10: Seitenschenkel
- 11: Befestigungsplatte
- 12: Mittelöffnung
- 13: Befestigungsbolzen
- 14: Ansatz
- 15: Versteifungsstege
- 16: Innengewinde
- 17: Durchtrittsöffnungen
- 18: Anschlussbolzen
- 19: unterer Rand
- 20: unterer Rand
- 21: Stützkegel
- 22: Tauchkolbenmantel

- B: Abstand
- E: Fahrzeuglängsmittelebene
- L: Abstand

## Patentansprüche

1. Aufhängung für eine luftgefederte Fahrzeugradachse, mit einem starren Achskörper (1) und mit je wenigstens einem Führungslenker (2) beidseits der Fahrzeuglängsmittelebene (E), welcher mit seinem vorderen Ende (3) an einem chassisfesten Lagerpunkt (4) angelenkt und im Abstand davon mit dem Achskörper (1) verbunden, z. B. verschweißt oder verspannt, ist, wobei ein von dem Achskörper (1) aus jeweils nach hinten ragender, eine mehrere Löcher (8) für den lösbaren Anschluss einer Luftfeder (6) aufweisende Lagerplatte (7) bildender Tragarm (5) das untere Auflager für die Luftfeder (6) bildet, auf deren Oberseite sich das Chassis abstützt, **dadurch gekennzeichnet, dass** die Löcher (8) derart über Länge und Breite der Lagerplatte (7) verteilt angeordnet sind, dass dadurch die Position ein und derselben Luftfeder (6) hinsichtlich ihres Abstandes (L) von dem chassisfesten Lagerpunkt (4) und hinsichtlich ihres Abstandes (B) von der Fahrzeuglängsmittelebene (E) veränderbar ist.

2. Aufhängung nach Anspruch 1, **dadurch gekennzeichnet, dass** der Tragarm (5), jedenfalls im Bereich der Lagerplatte (7), einen nach unten offenen U-Querschnitt mit gegenüber der oberen Lagerplatte (7) abgewinkelten Seitenschenkeln (10) aufweist.

3. Aufhängung nach Anspruch 1 oder 2, **dadurch gekennzeichnet, dass** die Luftfeder (6) einen Tauchkolben (9) für einen Luftfederbalg aufweist und der Tauchkolben (9) mittels einer Befestigungsplatte (11) auf der Lagerplatte (7) lösbar befestigbar ist.

4. Aufhängung nach Anspruch 3, **dadurch gekennzeichnet, dass** die Befestigungsplatte (11) eine Mittelöffnung (12) für einen durch einen der Löcher (8) der Lagerplatte (7) hindurchführbaren Befestigungsbolzen (13) aufweist.

5. Aufhängung nach Anspruch 4, **dadurch gekennzeichnet, dass** die Mittelöffnung (12) in einem zentrischen Ansatz (14) der Befestigungsplatte (11) vorgesehen ist, wobei sich vorzugsweise an den Ansatz (14) nach außen im Wesentlichen radiale Versteifungsstege (15) anschließen.

6. Aufhängung nach Anspruch 4 oder 5, **dadurch gekennzeichnet, dass** die Mittelöffnung (12) ein Innengewinde (16) für den Befestigungsbolzen (13) aufweist.

7. Aufhängung nach einem der Ansprüche 3 bis 6, **dadurch gekennzeichnet, dass** die Befestigungsplatte (11) über ihren Außenumfang verteilte Durchtrittsöffnungen (17) für in den Tauchkolben (9) der Luftfeder (6) eintretende Anschlussbolzen (18) aufweist.

8. Aufhängung nach einem der Ansprüche 3 bis 7, **dadurch gekennzeichnet, dass** die Befestigungsplatte (11) aus Leichtmetall oder Kunststoff besteht.

## Claims

1. Suspension for an air-suspended vehicle axle with a rigid axle body (1) and with at least one radius arm (2) on both sides of the vehicle longitudinal centre plane (E), which arm is hinged with its front end (3) at a fixed chassis mounting point (4) and connected e.g. welded or clamped at a distance therefrom with the axle body (1), where a carrier arm (5) projecting to the rear from the axle body (1) and having several holes (8) for releasable connection of an air spring (6) and forming a bearing plate (7) forms the lower support for the air spring (6), on the upper side of which rests the chassis, **characterised in that** the holes (8) are arranged distributed over the length and width of the bearing plate (7) such that as a result the position of one and the same air spring (6) can be modified in relation to its distance (L) from the fixed chassis mounting point (4) and in relation to its distance (B) from the vehicle longitudinal centre plane (E).

2. Suspension according to claim 1, **characterised in that** the carrier arm (5) in each case has in the area of the bearing plate (7) a U-shaped cross-section open at the bottom with side legs (10) angled out in relation to the upper bearing plate (7).

3. Suspension according to claim 1 or 2, **characterised in that** the air spring (6) has a plunger (9) for an air spring gaiter and the plunger (9) is releasably attachable by means of a fixing plate (11) on the bearing plate (7).

4. Suspension according to claim 3, **characterised in that** the fixing plate (11) has a centre opening (12) for a fixing bolt (13) which can be passed through one of the holes (8) in the bearing plate (7).

5. Suspension according to claim 4, **characterised in that** the centre opening (12) is provided in a centre shoulder (14) of the fixing plate (11), where reinforcement webs (15) essentially radial to the outside preferably connect to the shoulder (14).

6. Suspension according to claim 4 or 5, **characterised in that** the centre opening (12) has an internal thread (16) for the fixing bolt (13).

7. Suspension according to any of claims 3 to 6, **characterised in that** the fixing plate (11) has passage openings (17) distributed over its outer periphery for connecting bolts (18) entering in the plunger (9) of the air spring (6).

8. Suspension according to any of claims 3 to 7, **characterised in that** the fixing plate (11) consists of alloy or plastic.

## Revendications

1. Suspension pour un essieu de véhicule à suspension pneumatique, présentant un axe rigide (1) et au moins un bras de guidage (2) de chaque côté du plan médian longitudinal (E) du véhicule, lequel est articulé avec son extrémité antérieure (3) sur un pivot d'ancrage (4) solidaire du châssis et est relié, à distance dudit pivot, à l'axe (1) par exemple par soudure ou calage, un bras de support (5) dépassant respectivement de l'axe (1) vers l'arrière et formant une plaque d'appui (7) présentant plusieurs orifices (8) pour l'assemblage amovible d'une suspension pneumatique (6) constituant le support inférieur de la suspension pneumatique (6) sur la partie supérieure de laquelle s'appuie le châssis, **caractérisée en ce que** les orifices (8) sont agencés de manière à être répartis sur toute la longueur et la largeur de la plaque d'appui (7), de telle sorte que la position d'un seul et même ressort pneumatique (6) peut être ainsi modifiée en termes de distance (L) par rapport au pivot d'ancrage (4) solidaire du châssis et en termes de distance (B) par rapport au plan médian longitudinal (E) du véhicule.

2. Suspension selon la revendication 1, **caractérisée en ce que** le bras de support (5), du moins dans la zone de la plaque d'appui (7), présente une section en U ouverte vers le bas, avec des montants latéraux (10) incurvés par rapport à la plaque d'appui (7) supérieure.

3. Suspension selon la revendication 1 ou 2, **caractérisée en ce que** la suspension pneumatique (6) présente un piston plongeur (9) pour un soufflet à air, et **en ce que** le piston plongeur (9) peut être fixé de façon amovible sur la plaque d'appui (7) au moyen d'une plaque de fixation (11).

4. Suspension selon la revendication 3, **caractérisée en ce que** la plaque de fixation (11) présente une ouverture médiane (12) pour un boulon de serrage (13) pouvant être introduit par l'un des orifices (8) de la plaque d'appui (7).

5. Suspension selon la revendication 4, **caractérisée en ce que** l'ouverture médiane (12) est prévue dans un épaulement central (14) de la plaque de fixation (11), des talons de renforcement (15) essentiellement radiales venant se rattachant vers l'extérieur de préférence au niveau de l'épaulement (14).

6. Suspension selon la revendication 4 ou 5, **caractérisée en ce que** l'ouverture médiane (12) présente un filetage intérieur (16) pour le boulon de serrage (13).

7. Suspension selon l'une quelconque des revendications 3 à 6, **caractérisée en ce que** la plaque de fixation (11) présente des ouvertures (17) réparties sur sa circonférence extérieure pour des boulons de fixation (18) pénétrant dans le piston plongeur (9) de la suspension pneumatique (6).

8. Suspension selon l'une quelconque des revendications 3 à 7, **caractérisée en ce que** la plaque de fixation (11) est en métal léger ou en matière plastique.
